(19) Europäisches Patentamt
European Patent Office
Office européen des brevets

(11) EP 0 474 346 B1

(12) EUROPEAN PATENT SPECIFICATION

(45) Date of publication and mention
of the grant of the patent:
25.09.1996 Bulletin 1996/39

(51) Int. Cl.$^6$: C04B 35/00, B28B 1/26

(21) Application number: 91306467.1

(22) Date of filing: 16.07.1991

(54) Method of manufacturing a powder molding

Verfahren zur Herstellung eines Pulverformkörpers

Procédé pour la préparation d'un moulage de poudre

(84) Designated Contracting States:
AT BE CH DE DK ES FR GB GR IT LI LU NL SE

(30) Priority: 07.09.1990 JP 238747/90

(43) Date of publication of application:
11.03.1992 Bulletin 1992/11

(73) Proprietor: TOTO LTD.
Kita-kyusyu-shi, Fukuoka (JP)

(72) Inventor: Matsumoto, Akio,
c/o Toto Ltd.
Kita-Kyusyu-shi, Fukuoka (JP)

(74) Representative: Cockbain, Julian, Dr. et al
Frank B. Dehn & Co.,
European Patent Attorneys,
179 Queen Victoria Street
London EC4V 4EL (GB)

(56) References cited:
EP-A- 0 288 208          WO-A-87/06495
DE-A- 3 617 687          US-A- 4 624 808

• Chemical Abstracts, vol. 109, no. 18, 31 October 1988, Columbus, Ohio, US: abstract no. 154733, E.Y.PIVINSKY 'HIGHLY CONCENTRATED CERAMIC BINDER SUSPENSIONS.STABILISATION,RHEOLOGICAL PROPERTIES AND PRINCIPAL OF RHEOTECHNOLOGICAL CORRESPONDENCE' and OGNEUPORY, VOL. 6, 1988, LENINGRAD, PAGES 6-13
• CHEMICAL ABSTRACTS, vol. 111, no. 6, 7 July 1989, Columbus, Ohio, US; abstract no. 44013w, B.E.NOVICH ET AL. 'PRECISION CASTING OF HIGH PERFORMANCE CERAMICS' and Innovations in materials processing. Symposium proceedings 1989, Warrendale, Philadelphia, USA, pages 153-163

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Rank Xerox (UK) Business Services
2.13.4/3.4

**Description**

The present invention relates to a method of manufacturing a powder molding as a final or semi-finished product from various powdery materials including inorganic, organic and metallic materials, according to a wet forming process, and more particularly to a method of manufacturing a powder molding having a high packing density.

Various products, including medical products and foods, are manufactured from powdery raw or intermediate materials such as metallic materials, sintered materials or hydraulic materials.

Methods of manufacturing shaped articles of ceramic materials are described in WO87/06495 and EP-A-0288208. Chem. Abs. 109 (18): 154733x and 111(6): 44013w also describe processes for the casting of suspensions of ceramic particles.

One of the important characteristics which affects the properties of powder moldings is the packing characteristics. Such packing characteristics include packing uniformity and packing fraction.

Some products with functional gradients, i.e. spatially varying functional capabilities, should preferably be molded with a desired degree of non-uniformity of packing. A smaller packing fraction is preferable when porosity is important for the molded product. In most cases, however, powder moldings of high packing uniformity and large packing fraction are desirable because the packing uniformity leads to uniform physical properties and the large packing fraction results in high mechanical strength.

Sintered products of powdery ceramic materials are conventionally manufactured by a process which includes a firing step after a molding step, and have a packing fraction close to 1. Since the porosity of a molded product of a powdery ceramic material is the same as the firing shrinkage percentage, a molded product of a larger packing fraction is subject to a smaller firing shrinkage, and can therefore be sintered into a product of high dimensional stability and complex shape. Self-sintering ceramic materials such as silicon carbide may be fired at lower temperatures if they are molded with a large packing fraction.

Generally, there are two processes available for molding powdery materials. In one process, the dry molding process, the powdery material is filled into a mold and subjected to a high pressure. In the other process, the wet molding process, the powdery material is mixed with a solvent and the mixture is molded to the desired shape, with the solvent being removed whilst and/or after the mixture is being molded. The present invention relates to a wet molding process.

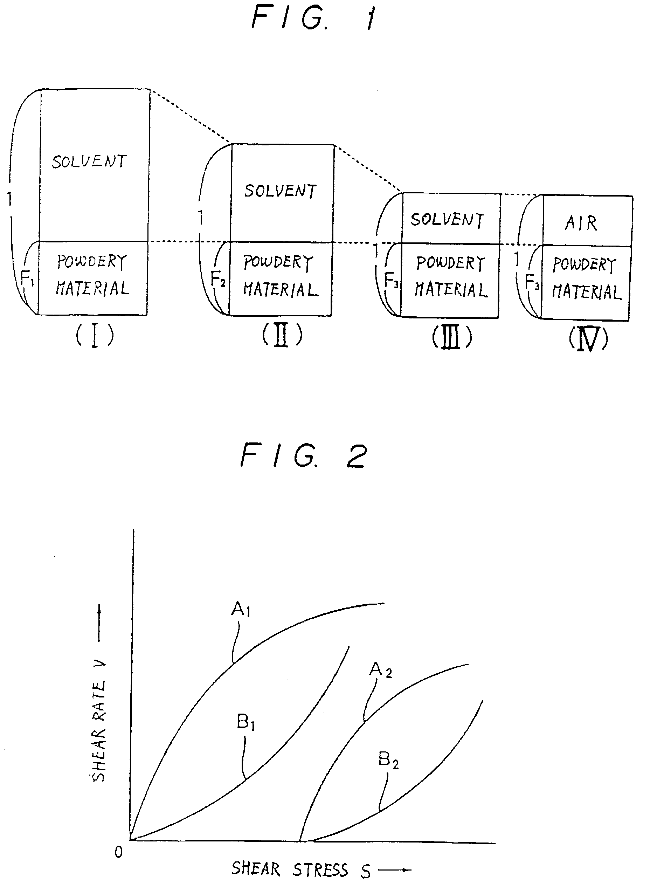

Conventional wet molding processes may conveniently be broken down into steps (I), (II), (III), and (IV), which are defined as follows and illustrated schematically in Figure 1 of the accompanying drawings:

(I) a powdery material and a solvent are mixed to produce a mixture from which the molding is to be formed;
(II) immediately afterwards the mixture is molded to the desired shape and while the mixture is being molded, the solvent is partly removed;
(III) the molded mixture is dried and shrunk by a drying step in which the solvent is partly removed, thereby allowing the molding to shrink accordingly; and
(IV) after the molded mixture is dried, the remaining solvent in the molded mixture is replaced by air.

If one assumes that step (I) produces a molding mixture in which the powdery material makes up volume fraction (i.e the fraction of the volume of the mixture) of F1, solvent loss and consequent shrinkage will increase this volume fraction to F2 and F3 for steps (II) and (III) respectively. F3 will however also represent the volume fraction or packing fraction for the molding produced in step (IV).

Steps (I) to (IV) are generally representative of conventional wet molding processes. There are, however, some other processes which do not follow this process. For example, part of the solvent remaining after step (III) may be lost with further shrinkage of the molding or may be replaced by another solvent rather than simply being replaced by air. Alternatively the process may be completed following step (III). Moreover, the volume fractions may satisfy the relationship F1≈F2≈F3 if the water used for hydration is not contained in the volume fraction of the powdery material when either concrete or a castable refractory is molded without the use of a water-absorbing mold. However, the present invention generally relates to the case where F1 < F3.

Heretofore, in order to produce powder moldings of large packing fraction, there has been employed a powdery material having a particle size distribution in which small particles fill in gaps between larger particles, and even smaller particles fill in gaps between the small particles. In conventional processes, during the molding step, the mixture of the powdery material and the solvent is rendered thixotropic so that the molded product will nearly be in a condition of closest packing.

The mixture of a powdery material and a solvent can however exhibit various flow patterns including a dilatant flow pattern and a thixotropic flow pattern as illustrated schematically by shear rate (V) - shear stress (S) curves in Figure 2 of the accompanying drawings.

The dilatant flow pattern is illustrated by curves A1 and A2 in Figure 2, in which a shear stress S is applied to the mixture of a powdery material and a solvent, the rate of increase of a shear rate V underlines{decreases} as the shear stress S increases. For thixotropic flow by contrast, as illustrated by curves B1 and B2 in Figure 2, the rate of increase of the

shear rate V <u>increases</u> as the shear stress S increases. The actual flowability of the mixture is characterized by a combination of nine flow patterns including the dilatant and thixotropic flow patterns. The dilatant and thixotropic flow patterns are understood to degenerate from the other flow patterns. The term "dilatant flow" as used herein signifies a region where the volume fraction of the powdery material in the mixture is high, including a transitional region from the thixotropic flow to the dilatant flow, and would generally have been considered to be a most undesirable flow as it obstructs the ease with which the mixture is kneaded or stirred or poured into the mold.

The dilatant flow is expressed by:

$$n = d \log S / d \log V$$

with respect to the shear stress S and the shear rate V at any desired point on the flow curves shown in Figure 2. The larger the numeral n, the stronger the dilatant flow, and the smaller the numeral n, the stronger the thixotropic flow. Dilatant flow can often be sensed by the operator of the molding process based on the resistance to stirring of the molding mixture because when the mixture is stirred, its viscosity is increased, requiring the operator to exert more force to stir the mixture of sometimes making it impossible for the operator to stir the mixture.

Efforts to exploit the dilatant flow have not been made except for certain limited applications such as cushioning materials, adhesives, etc.

Heretofore, the volume fraction F1 of the slip, the mixture of a powdery material and a solvent, used in slip casting of ceramic products has been about 0.45, and has not exceeded 0.55.

In a slip casting process, a powdery ceramic, metallic or other material is dispersed into a solvent, to make a slurry. The slurry is then poured into a porous mold, and the solvent is partly absorbed into the porous mold due to the capillary action of the pores, gravity, pressure, or centrifugal forces generated if the mold is rotated. The slurry with the solvent thus removed is formed into a molding by the mold.

It is difficult to control the particle size distribution of a powdery material whose volume fraction F1 in the mixture is small so as to cause the molding to achieve a closest packing condition. Even if the particle size distribution of the powdery material can be controlled, the powdery material tends to agglomerate in the mixture, and hence a powder molding of high packing fraction cannot be produced in most cases.

For these reasons, even if slip casting is carried out while controlling the particle size distribution of the powdery material with a volume fraction F1 of 0.55 or smaller, the packing fraction of the resultant molding is at most in the range 0.55 to 0.7 when a powdery ceramic material is molded by slip casting using a plaster mold under atmospheric pressure, and at most 0.45 to 0.65 if a fine ceramic powder of submicron sized particles is molded.

Injection molding of ceramic materials, which has recently been carried out in research activities, employs a slurry with a considerably large F1. However, the slurry has to be kept at high temperature and the equipment required is large in scale because the slurry is kept in a highly viscous condition at high temperature and forcibly injected into the mold by means such as a plunger or a screw.

To manufacture products of complex shape, such as ceramic engine or machine parts, there has been a demand for a process by which powder moldings of higher packing fraction and hence smaller firing shrinkage percentage may be manufactured relatively simply.

Accordingly, an objective of the present invention is to provide a method of manufacturing a powder molding which has a higher packing fraction than that of conventional powder moldings, is of high dry strength, and which also has a small firing shrinkage percentage.

Thus viewed from one aspect the invention provides a method of manufacturing a powder molding comprising mixing a powdery material and a solvent into a mixture, pouring the mixture into a porous mold to make a molding of desired shape by absorption of the solvent into the porous mold, and drying the molding, characterised in that said mixture is adjusted to exhibit a dilatant flow.

Viewed from another aspect the present invention also provides a method of manufacturing a powder molding by slip casting comprising mixing a powdery ceramic material and a solvent into a mixture such that the powdery ceramic material in the mixture has a volume fraction ranging from 0.58 to 0.75; molding said mixture into a molding of desired shape by slip casting; and drying said molding.

In the method of the present invention, various powdery materials including inorganic, organic, and metallic materials may be used. However the term powdery materials as used herein extends to cover other particulate or finely divided materials besides conventional granular materials, and in particular to cover materials such as short fibres, whiskers, or the like which may be treated as powdery materials and may be employed in the present invention.

In the slip casting method of the invention, any ceramic materials may be molded, including for example fine ceramic materials, e.g., alumina, silicon nitride, silicon carbide, sialon, zirconia, mullite and cordierite, and conventional ceramic materials mainly composed of natural materials, e.g., clay, porcelain stone, feldspar and silica stone.

In the method of the present invention, a solvent is used. Conveniently this may be any solvent which can be mixed with and can disperse the powdery material without reacting therewith. Depending on the type of the powdery material used, water or any of various organic solvents is preferably employed.

To the mixture of the powdery material and the solvent, there may be added further components such as for example a dispersing agent, an agglomerating agent, a deflocculating agent, a surface active agent or a lubricant.

The mixture may be caused to exhibit dilatant flow by adjusting the ratio of the powdery material to the solvent so that the proportion of the solvent is reduced. Normally, the mixture ratio is adjusted by varying the ratio of the solvent to the powdery material. If the viscosity of the mixture is too high to effect subsequent crushing, mixing, and stirring of the mixture, then the solvent may be charged at a proportion greater than the predetermined proportion. Then, before the mixture is poured into the mold, the excess solvent may be removed by evaporation, filtering, or re-mixing of the filter press cake.

Alternatively, the particle size distribution of the powdery material may be adjusted to make the mixture dilatant for example by concentrating the particle size distribution in a certain particle size range, for example by removing smaller particles or by adding larger particles. This process is the reverse of a process of manufacturing a castable product with no dilatant flow and is especially effective if it is difficult to obtain dilatancy simply by adjusting the ratio of the powdery material to the solvent, e.g. if the viscosity of the mixture is too high to handle the mixture due to a reduced solvent ratio, or if a large amount of plastic clay is contained in the mixture thereby preventing the mixture from being dilatant.

The packing fraction of a powder molding may be increased by making the mixture of the powdery material and a solvent dilatant or by selecting the volume fraction of a powdery ceramic material in a mixture to be in the range of from 0.58 to 0.75. The reason why the packing fraction of the powder molding is increased by such a processing step appears to be as follows:

A mixture of a powdery material, contained at a high ratio, and a solvent has an agglomeration of particles in a coarse particle structure with the solvent held therein in a free state. When external forces are applied to the mixture, the particle structure is re-arranged, discharging the free solvent, and is packed, resulting in a molding of high packing fraction.

External forces may be applied by vibrating the mixture, making it possible to mold a mixture which is otherwise difficult to handle due to its high viscosity. For example, if vibration is applied to a mixture of high volume fraction $F_1$ which is substantially non-flowable, such as a press cake produced by a filter press, the particle structure is re-arranged, discharging the free solvent. The mixture is then rendered apparently flowable, such that the mixture may, for example, be poured into a mold.

The process of applying vibration to the mixture is totally different in principle to the conventional vibration molding process (also known as thixotropic molding). According to the thioxotropic molding process, vibration is applied to a highly thixotropic mixture of a powdery material and a solvent to add a high shear stress, thereby lowering the viscosity of the mixture. After the mixture is poured in to a mold, the vibration is removed to allow the mixture to solidify.

The mixture used in the present invention is, however, of high dilatancy, and therefore becomes highly viscous upon application of a shear stress. The mixture which is rendered flowable apparently by the vibration can flow, but gives an extremely hard tactile sensation when touched whilst flowing.

Preferred embodiments of the invention will now be described by way of example and with reference to the accompanying drawings in which:

FIG. 1 is a diagram illustrative of volume fractions of a powdery material in a mixture in various steps of a process of manufacturing a powder molding;

FIG. 2 is a graph showing dilatant flow patterns according to the present invention and thixotropic flow patterns according to the prior art; and

FIG. 3 is a graph showing the relationship between a volume fraction $F_1$ of the powdery material in a slip or mixture and the packing fraction $F_3$ of the powdery material in a powder molding.

In the method of the present invention $F_1 < F_3$, and preferably also $F_1 < F_2$.

The relationship $F_1 < F_2$ is achieved when the process shown in Figure 2 goes from step (I) to step (II), for example if slip casting, molding, tape molding, press molding or dip molding is employed. Slip casting is particularly preferably employed in the methods of the present invention.

## Example 1

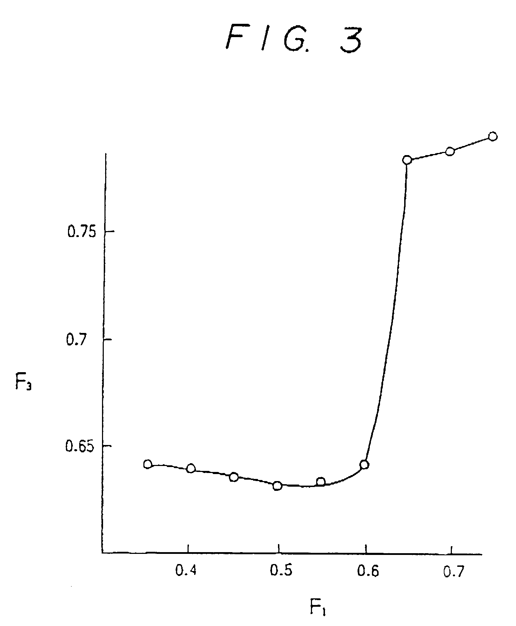

Nine slips, mixtures of powdery alumina, as a powdery material, and water, as a solvent, were prepared with the powdery alumina having a true specific gravity of 3.92 and an average particle diameter of 1 $\mu$m. The powdery alumina in the prepared slips had volume fractions $F_1$ ranging from 0.35 to 0.75. The slips were molded in plaster molds under atmospheric pressure by slip casting. The relationship between the volume fractions $F_1$ of the powdery alumina in the slips, the packing fractions of the moldings thus produced, and the viscosities of the slips is shown in Table 1 below in which the slips are numbered 1 to 9. The relationship between the volume fractions $F_1$ and the packing fractions $F_3$ is shown in Figure 3.

Table 1

| Slip No. | F1 | F2 | Viscosity in Pa.S (CP) |
|---|---|---|---|
| 1 | 0.35 | 0.640 | $25 \times 10^{-3}$ (25) |
| 2 | 0.40 | 0.638 | $38 \times 10^{-3}$ (38) |
| 3 | 0.45 | 0.635 | $50 \times 10^{-3}$ (50) |
| 4 | 0.50 | 0.631 | $12 \times 10^{-2}$ (120) |
| 5 | 0.55 | 0.631 | $28 \times 10^{-2}$ (280) |
| 6 | 0.60 | 0.640 | $53 \times 10^{-2}$ (530) |
| 7 | 0.65 | 0.782 | $95 \times 10^{-2}$ (950) |
| 8 | 0.70 | 0.786 | 3.2 (3200) |
| 9 | 0.75 | 0.792 | 28 (28000) |

When slip No. 7 was stirred with a stirring rod, a slight resistance was felt. When slip No. 8 was stirred with a stirring rod, a considerable resistance was felt, and when slip No. 9 was stirred with a stirring rod, the slip around the stirring rod solidified making it impossible to move the stirring rod. The slip flowability changed between slip No. 6 and slip No. 7. Slips 6 to 9 exhibited dilatant flow. From Figure 3 it can be seen that the packing fraction F3 abruptly increases between the F1 values of 0.6 and 0.65 which correspond to slip Nos. 6 and 7 respectively.

Slip No. 9 was filled into the mold whilst the slip was being vibrated. The container which contained the slip and the plaster mold which was placed directly underneath the container were vibrated at a frequency of 60Hz, thereby making the slip flowable and allowing the slip to be filled into the mold with ease.

The results of the above experiments demonstrate that slips exhibiting dilatant flow can be molded into powder moldings with much higher packing fractions F3 than those of other slips.

The value of the volume fraction F1 at which the packing fraction F3 abruptly rises varies depending on the kind of powdery material used and the particle size distribution thereof.

For example, if a particle size distribution corresponding to larger particles is selected, the value of the volume fraction F1 at which the packing fraction F3 abruptly rises decreases. If the average particle diameter of the alumina powder in the slips is 2.1 $\mu$m, then the volume fraction F1 and the packing fraction F3 are related as shown in Table 2 below.

Table 2

| Slip No. | F1 | F3 |
|---|---|---|
| 1 | 0.45 | 0.649 |
| 2 | 0.52 | 0.645 |
| 3 | 0.56 | 0.649 |
| 4 | 0.58 | 0.728 |
| 5 | 0.60 | 0.740 |
| 6 | 0.63 | 0.742 |

It can be seen from Table 2 that if the alumina powder had an average particle diameter of 2.1 $\mu$m, the value of the volume fraction F1 at which the packing fraction F3 abruptly rises ranges from 0.56 to 0.58. Since the value of the volume fraction F1 at which the packing fraction F3 abruptly rises if the average particle diameter of the alumina powder is 1 $\mu$m as can be understood from Table 1 and Figure 3, it can be seen that the value of the volume fraction F1 at which the packing fraction F3 abruptly rises decreases if the particle size distribution is selected for larger particles.

The relationship between the volume fraction F1 and the packing fraction F3 in slips 1 to 6 each of a mixture of partially stabilized zirconia powder and water, the zirconia powder having an average particle diameter of 0.6 $\mu$m, is shown in Table 3 below:

Table 3

| Slip No. | F1 | F3 |
|---|---|---|
| 1 | 0.40 | 0.551 |
| 2 | 0.45 | 0.568 |
| 3 | 0.50 | 0.582 |
| 4 | 0.55 | 0.584 |
| 5 | 0.60 | 0.582 |
| 6 | 0.63 | 0.701 |

It can be seen from Table 3 that the value of the volume fraction F1 at which the packing fraction F3 abruptly rises ranges from 0.60 to 0.63.

As described above, a ceramic molding with a high packing fraction F3 can be produced from a slip having a high volume fraction F1. However, if the volume fraction F1 were too high, the viscosity of the slip would be too high to stir the slip easily. Therefore, the maximum volume fraction F1 is preferably about 0.75.

It can be seen from Figure 3, that if an attempt is made to increase the volume fraction F1 of the conventional slips whose volume fraction F1 is 0.55 or less, then the packing fraction F3 of the ceramic molding would not be increased, but since the slip contains many particles per unit volume, the particles would be liable to agglomerate into a floc of coarse structure. The packing fraction F3 would be reduced rather than it would approximately be equalized to the volume fraction F1 as with the casting of concrete. It follows, therefore, that the process of increasing the packing fraction F3 by increasing the volume fraction F1 in the slip casting as is the case with the present invention could not be possible with the conventional process.

With conventional slips whose volume fraction F1 is 0.55 or less, the packing fraction F3 may be slightly increased when the volume fraction F1 is increased. This results either from the addition of a large amount of dispersing agent which prevents the slip particles from agglomerating thereby improving the dispersion of the particles in the solvent, or from the slip particles agglomerating before they are deposited on the mold surface since the deposition of the slip particles is relatively slow. The slips whose volume fraction F1 ranges from 0.40 to 0.50 exhibit such a tendency. With these slips, however, the packing fractions F3 were not intentionally increased, and did not sharply rise as shown in Figure 3.

<u>Example 2</u>

Compositions:

| | |
|---|---|
| Alumina (AES-21 made by Sumitomo Chemical Co., Ltd.) | 50 parts by weight |
| Alumina (AL-43M made by Sumitomo Chemical Co., Ltd.) | 50 parts by weight |
| Polycarboxylic acid ammonium salt (Selna D-305 made by Chukyo Yushi Co., Ltd.) | 0.3 part by weight |
| Acrylic emulsion (WA-320 made by Chukyo Yushi Co., Ltd.) | 0.8 part by weight |
| Magnesium carbonate (Wako Junyaku Co., Ltd.) | 0.1 part by weight |
| Water | 12.5 parts by weight |

These materials, together with alumina balls, were placed in an alumina pot, and crushed into a slip by a ball mill for 48 hours. The true specific gravity of alumina was 3.92, and the volume fraction F1 of the powdery material in the slip was 0.671. The particle size distribution of the slip was measured by a light-dispersion-type particle size distribution meter. The particles whose diameter was 1 $\mu$m or more constituted 18.8 volume %, the particles whose diameter ranged from 0.5 $\mu$m to 1 $\mu$m constituted 43.5 volume %, the particles whose diameter ranged from 0.2 $\mu$m to 0.5 $\mu$m constituted 28.2 volume %, and the particles whose diameter was 0.2 $\mu$m or less constituted 9.5 volume %.

Comparative Example 3

Sufficient water was added to the slip produced according to Example 2 that the water constituted 27 parts by weight and the alumina constituted 100 parts by weight. The slip was stirred for 24 hours while it was prevented from drying, thereby producing Comparative Example 3 whose powder volume fraction F1 was 0.486.

The slip according to Comparative Example 3 was prepared simply by adding water to the slip according to Example 2 because it was necessary to equalize the conditions other than the volume fraction F1 for easy comparison.

Example 4

The slips according to Examples 2 and 3 were aged for two days. Thereafter, the slips were measured for flowability, molded into moldings, the moldings were measured for packing fractions and dry strength, and were then fired.

When the slip according to Example 2 was stirred with a stirring rod, a slight resistance was felt. However, nothing disturbed the pouring of the slip into a mold.

The slip flowability was measured by measuring shear stresses and shear rates at three points in the slip. The slip viscosity was indicated as an apparent viscosity at the shear rate of 12.6 $sec^{-1}$.

The slips were poured into plaster molds whose interior space was of a size 15 mm x 15 mm x 150 mm. After the slips were deposited, the moldings were removed, and completely dried at 120°C. The powder moldings according to Examples 2 and 3 were produced in this manner.

The powder moldings according to Examples 2 and 3 were measured for the packing fraction F3 by the Archimedes' method. The powder moldings were also measured for dry strength by the three-point bending test.

Thereafter, the powder moldings were fired at 1,700°C to achieve a density which is substantially equal to the theoretical density. The linear firing shrinkage percentage is calculated from the packing fraction F3 according to the equation:

$$1 - (F3)^{1/3}.$$

The results of the measurement are given in Table 4 below.

Table 4

| | Example 2 | Comparative Example 3 |
|---|---|---|
| Volume fraction (F1) | 0.671 | 0.486 |
| Shear rate ($sec^{-1}$): | 1.26 : 1.0 (10.0) | 1.26 : 0.128 (1.28) |
| Shear stress in Pa (dyne/$cm^2$) | 12.6 : 10.5 (105) | 12.6 : 0.402 (4.02) |
| | 31.0 : 52.0 (520) | 110 : 1.60 (16.0) |
| Viscosity (CP) | 830 | 32 |
| Packing fraction (F3) | 0.785 | 0.629 |
| Dry strength in MPa (Kgw/$cm^2$) | 16.8 (168) | 9.35 (93.5) |
| Linear firing shrinkage percentage | 7.8 | 14.3 |

As described above, the packing fraction F3 of the powder molding formed according to the present invention is much larger than that of the conventional powder moldings, and hence is of high dry strength. The fired powder molding has a small firing shrinkage percentage.

When the highly viscous mixture or slip is vibrated, it is rendered easily flowable, so that it can easily be poured into the mold or otherwise handled with ease.

**Claims**

1. A method of manufacturing a powder molding comprising mixing a powdery material and a solvent into a mixture, pouring the mixture into a porous mold to make a molding of desired shape by absorption of the solvent into the porous mold, and drying the molding, wherein said mixture is adjusted to exhibit a dilatant flow.

2. A method as claimed in claim 1, wherein the mixture ratio of said powdery material to said solvent is adjusted thereby causing said mixture to exhibit a dilatant flow.

3. A method as claimed in claim 1, wherein the particle size distribution of said powdery material is adjusted thereby causing said mixture to exhibit a dilatant flow.

4. A method as claimed in any one of claims 1 to 3, wherein said mixture is vibrated when the mixture is molded.

5. A method as claimed in any one of claims 1 to 4, wherein said mixture has a volume fraction F1 of powdery material in the range of from 0.58 to 0.75.

**Patentansprüche**

1. Verfahren zur Herstellung eines Pulverformteils, umfassend die Herstellung einer Mischung aus einem pulverförmigen Material und einen Lösungsmittel, Gießen der Mischung in eine poröse Form, um ein Formteil der gewünschten Form durch Absorption des Lösungsmittels in die poröse Form herzustellen, und Trocknen des Formteils, wobei die Mischung so eingestellt ist, daß, sie einen dilatanten Fluß zeigt.

2. Verfahren gemäß Anspruch 1, wobei das Mischungsverhältnis des pulverförmigen Materials zu dem Lösungsmittel so eingestellt wird, daß dadurch die Mischung einen dilatanten Fluß aufweist.

3. Verfahren gemäß Anspruch 1, wobei die Teilchengrößenverteilung des pulverförmigen Materials so eingestellt wird, daß dadurch die Mischung einen dilatanten Fluß aufweist.

4. Verfahren gemäß einem der Ansprüche 1 bis 3, wobei die Mischung beim Formen in Vibration versetzt wird.

5. Verfahren gemäß einem der Ansprüche 1 bis 4, wobei die Mischung eine Volumenfraktion F1 des pulverförmigen Materials im Bereich von 0,58 bis 0,75 aufweist.

**Revendications**

1. Procédé de fabrication d'un moulage de poudre, comprenant le mélange d'un matériau en poudre et d'un solvant sous forme d'un mélange, la coulée de ce mélange dans un moule poreux pour la formation d'un moulage de configuration voulue par absorption du solvant par le moulage poreux, et le séchage du moule, dans lequel le mélange est ajusté afin qu'il présente un écoulement dilatant.

2. Procédé selon la revendication 1, dans lequel le rapport de mélange du matériau en poudre et du solvant est ajusté de manière que le mélange présente un écoulement dilatant.

3. Procédé selon la revendication 1, dans lequel la distribution de dimensions particulaires du matériau en poudre est ajustée de manière que le mélange présente un écoulement dilatant.

4. Procédé selon l'une quelconque des revendications 1 à 3, dans lequel le mélange est soumis à des vibrations pendant qu'il est moulé.

5. Procédé selon l'une quelconque des revendications 1 à 4, dans lequel le mélange a une fraction volumique F1 du matériau en poudre comprise entre 0,58 et 0,75.

## F I G. 1

(I)    (II)    (III)    (IV)

## F I G. 2

# F I G. 3